# EUROPÄISCHE PATENTANMELDUNG

(11) **EP 2 241 593 A1**
(43) Veröffentlichungstag der Anmeldung: **20.10.2010**
(21) Anmeldenummer: 09005138.4
(22) Anmeldetag: 08.04.2009
(51) Int. Cl.: C08K 7/24, C08K 9/08, C09C 3/00, C09C 3/10

(54) **Polymerfunktionalisierte Kohlenstoffnanoröhre, Verfahren zu deren Herstellung und Verwendung**

(71) Anmelder: Bayer MaterialScience AG, 51368 Leverkusen (DE)
(72) Erfinder: Jenninger, Werner Dr., 50677 Köln (DE); Wagner, Joachim Dr., 51061 Köln (DE); Meyer, Helmut Dr., 51519 Odenthal (DE); Vogel, Stefanie Dr., 40764 Langenfeld (DE); Spange, Stefan Dr., 07768 Orlamünde (DE); Piasta, Doreen, 09126 Chemnitz (DE); Simon, Frank Dr., 01099 Dresden (DE); Grünler, Bernd Dr., 07937 Zeulenroda (DE); Heft, Andreas Dr., 07545 Gera (DE)

(57) **Zusammenfassung**

Die vorliegende Erfindung betrifft polymerfunktionalisierte Kohlenstoffnanoröhren, umfassend eine Kohlenstoffnanoröhre, ein an der äußeren Oberfläche einer Kohlenstoffnanoröhre adsorbiertes, Aminogruppen umfassendes erstes Polymer sowie ein an das erste Polymer kovalent gebundenes zweites Polymer, wobei die Bindung des zweiten Polymers an das erste Polymer durch die Reaktion von Aminogruppen des ersten Polymers mit gegenüber Aminogruppen reaktiven Gruppen des zweiten Polymers erreicht wird. Sie betrifft weiterhin ein Verfahren zu deren Herstellung, wobei Kohlenstoffnanoröhren in einer wässrigen Lösung eines Aminogruppen umfassenden ersten Polymers bereitgestellt werden und anschließend eine Lösung eines zweiten, gegenüber Aminogruppen reaktive Gruppen umfassendes Polymer hinzugefügt wird. Gegenstand der Erfindung ist auch die Verwendung der Kohlenstoffnanoröhren in Dispersionen, Polymeren und Oberflächenbeschichtungen.

## Beschreibung

Die vorliegende Erfindung betrifft eine polymerfunktionalisierte Kohlenstoffnanoröhre, umfassend eine Kohlenstoffnanoröhre, ein an der äußeren Oberfläche der Kohlenstoffnanoröhre adsorbiertes, Aminogruppen umfassendes erstes Polymer sowie ein an das erste Polymer kovalent gebundenes zweites Polymer. Sie betrifft weiterhin ein Verfahren zur Herstellung einer solchen polymerfunktionalisierten Kohlenstoffnanoröhre, eine diese Nanoröhren umfassende Dispersion, diese Nanoröhren umfassende Polymere sowie diese Nanoröhren umfassende Oberflächenbeschichtungen.

Kohlenstoffnanoröhren (carbon nanotubes, CNT) gelten als interessante Materialien für eine Vielzahl von Anwendungen in Low- und High-Tech-Bereich. Für viele Anwendungen sind die Vereinzelung von Kohlenstoffnanoröhren und das Aufrechterhalten ihrer Dispergierung in Suspensionen oder Polymermatrizes wichtig.

Es ist eine Vielzahl von Arbeiten bekannt, in denen Oberflächenreaktionen an Kohlenstoffnanoröhren beschrieben werden. Häufig werden oxidierende Verfahren genutzt, um Keto- und Carbonsäuregruppen an der Oberfläche der Nanoröhren reaktiv anzubinden und damit eine hinreichende Oberflächenpolarität und Oberflächenreaktivität für mögliche Folgereaktionen zu schaffen. Nachteilig an dieser Funktionalisierung ist jedoch, dass durch die Oxidation das delokalisierte π-Elektronensystem der Nanoröhre unterbrochen werden kann, was den Verlust von gewünschten Eigenschaften zur Folge haben kann. Eine Alternative hierzu ist das Umhüllen der Nanoröhren mit Polymeren.

EP 1 988 390 A2 offenbart das Design und die Synthese eines Matrix-Nanoverbundwerkstoffs mit Amino-Kohlenstoffnanoröhren als funktionalisierte Sensorschicht zur Detektion von Kohlendioxid mittels Schallwellenerkennung, zum Beispiel akustischen Oberflächenwellen oder Körperschallwellen. Diese Sensormaterialien beinhalten eine Amino-Kohlenstoffnanoröhre (einwandig oder mehrwandig) und ein Polymer oder andere Verbindungen, welche in dem schallwellenbasierten Sensor gegenüber Kohlendioxid empfindlich sind. Die Empfindlichkeit der Matrix aus den Amino-Kohlenstoffnanoröhren und einem Polymer oder anderen Verbindungen wird durch die Anwesenheit von Aminogruppen sichergestellt, welche bei Raumtemperatur mit Kohlendioxid reversibel zu Carbamaten reagieren können. Polymere, mit dem die Amino-Kohlenstoffnanoröhren eine Matrix bilden können, sind unter anderem Polyvinylamin und Polyallylamin.

WO 2002/16257 A2 offenbart polymerbeschichtete und polymerumhüllte einwandige Kohlenstoffnanoröhren. Diese Veröffentlichung betrifft weiterhin kleine Stränge von polymerbeschichteten und polymerumhüllten einwandigen Kohlenstoffnanoröhren und Materialien, die diese Nanoröhren enthalten. Solch eine Polymermodifikation unterbindet die van der Waals-Anziehungskräfte zwischen einzelnen einwandigen Kohlenstoffnanoröhren und kleinen Strängen aus einwandigen Kohlenstoffnanoröhren. Dadurch können diese Nanoröhren auch bei höheren Konzentrationen besser in einem Lösungsmittel suspendiert gehalten werden. Als geeignete Beschichtungspolymere werden unter anderem Polyvinylpyrrolidon, Polystyrolsulfonat, Poly(1-vinylpyrrolidon-co-vinylacetat), Poly(1-vinylpyrrolidon-co-acrylat), Poly(1-vinyl pyrrolidon-co-dimethylaminoethylmethacrylat), Polyvinylsulfat, Poly(natrium styrolsulfonsäureco-maleinsäure), Dextran, Dextransulfat, bovines Serumalbumin, Poly(methylmethacrylat-co-ethylacrylat), Polyvinylalkohol, Polyethylenglycol, Polyallylamine und deren Mischungen erwähnt.

Diese genannten Beschichtungspolymere weisen alle hydrophile Eigenschaften auf, so dass die damit beschichteten Polymere an ihrer Oberfläche folglich hydrophiliert werden. Für Anwendungen, in denen die Nanoröhren in eine weniger hydrophile Matrix eingearbeitet werden sollen, ist dieses aber nachteilig. Wünschenswert wären Kohlenstoffnanoröhren, in denen der Grad der Hydrophilie oder Hydrophobie der Oberfläche einstellbar ist.

Erfindungsgemäß vorgeschlagen wird daher eine polymerfunktionalisierte Kohlenstoffnanoröhre, umfassend eine Kohlenstoffnanoröhre, ein an der äußeren Oberfläche der Kohlenstoffnanoröhre adsorbiertes, Aminogruppen umfassendes erstes Polymer sowie ein an das erste Polymer kovalent gebundenes zweites Polymer, wobei die Bindung des zweiten Polymers an das erste Polymer durch die Reaktion von Aminogruppen des ersten Polymers mit gegenüber Aminogruppen reaktiven Gruppen des zweiten Polymers erreicht wird.

Erfindungsgemäß einsetzbare Kohlenstoffnanoröhren, im Folgenden auch synonym als Nanoröhren bezeichnet, umfassen alle einwandigen oder mehrwandigen Kohlenstoffnanoröhren vom Zylinder-Typ, Scroll-Typ, Multiscroll-Typ oder mit zwiebelartiger Struktur. Bevorzugt sind mehrwandige Kohlenstoffnanoröhren vom Zylinder-Typ, Scroll-Typ, Multiscroll-Typ oder deren Mischungen einzusetzen. Günstig ist es, wenn die Kohlenstoffnanoröhren ein Verhältnis von Länge zu Außendurchmesser von ≥5, bevorzugt ≥100 haben.

Im Unterschied zu den bereits erwähnten bekannten Kohlenstoffnanoröhren vom Scroll-Typ mit nur einer durchgehenden oder unterbrochenen Graphenlage existieren auch Kohlenstoffnanoröhren-Strukturen, die aus mehreren Graphenlagen bestehen, welche zu einem Stapel zusammengefasst und aufgerollt vorliegen. Man spricht hierbei vom Multiscroll-Typ. Diese Kohlenstoffnanoröhren sind dem Fachmann bekannt und werden in DE 10 2007 044031 A1 beschrieben, auf die in vollem Umfang Bezug genommen wird. Diese Struktur verhält sich zu den Kohlenstoffnanoröhren vom einfachen Scroll-Typ vergleichsweise wie die Struktur mehrwandiger zylindrischer Kohlenstoffnanoröhren (cylindrical MWNT) zur Struktur der einwandigen zylindrischen Kohlenstoffnanoröhren (cylindrical SWNT).

Vorteilhafterweise sind die eingesetzten Kohlenstoffnanoröhren an ihrer Oberfläche nicht kovalent funktionalisiert. Dieses bedeutet, dass die Nanoröhren keine zusätzlichen, über weitere Reaktionsschritte kovalent angebundenen funktionellen Gruppen an ihrer Oberfläche tragen. Insbesondere vermieden wird der Einsatz von Oxidationsmitteln wie Salpetersäure, Wasserstoffperoxid, Kaliumpermanganat und Schwefelsäure oder eine mögliche Mischung dieser Mittel für die Funktionalisierung der Nanoröhren. Vorteilhaft am Einsatz nicht kovalent funktionalisierter Nanoröhren ist, dass das π-Elektronensystem der Oberfläche nicht gestört wird und daher uneingeschränkt mit freien Aminogruppen des ersten Polymers wechselwirken kann.

Es ist vorgesehen, dass an der äußeren Oberfläche der Kohlenstoffnanoröhre ein Aminogruppen umfassendes erstes Polymer adsorbiert ist. Die Adsorption ist so zu verstehen, dass keine kovalente Anbindung des ersten Polymers an die Nanoröhrenoberfläche stattfindet, sondern nichtkovalente Wechselwirkungen bestehen. Beispiele hierfür sind Elektronentransfers des freien Elektronenpaars des aminischen Stickstoffatoms in das konjugierte π-Elektronensystem der Nanoröhre oder aber thermodynamische Effekte beim Umwickeln der Nanoröhre mit dem Polymerstrang. Das erste Polymer kann die Nanoröhre einfach oder mehrfach umwickeln. Es ist auch möglich, dass das erste Polymer die Nanoröhre nicht umwickelt, sondern lediglich auf dessen Oberfläche aufliegt.

Die erfindungsgemäße polymerfunktionalisierte Kohlenstoffnanoröhre umfasst weiterhin ein an das erste Polymer kovalent gebundenes zweites Polymer. Die kovalente Bindung des zweiten Polymers an das erste wird erreicht, indem reaktive Gruppen des zweiten Polymers mit den Aminogruppen des ersten Polymers reagieren. Reaktive Gruppen des zweiten Polymers können beispielsweise Säuregruppen, Säurehalogenide, Säureanhydride, aktivierte Carbonsäuregruppen wie Carbonsäurehalogenide, Carbonsäuremethylester, Carbonsäureanhydride, Succinimidylester, weiterhin Isocyanatgruppen, Aldehydgruppen, Ketogruppen und/oder Epoxidgruppen sein.

Dadurch, dass ein zweites Polymer mit freien Aminogruppen des ersten Polymers zur Reaktion gebracht wird, kann die primäre Adsorbatschicht des ersten Polymers auf der Kohlenstoffnanoröhre durch intramolekulare oder intermolekulare Vernetzungsreaktionen stabilisiert werden. Vorrangig hierbei sind die intramolekularen Vernetzungen. Dieses steht im Gegensatz zu einer einfachen Funktionalisierung der Schicht des ersten Polymers durch niedermolekulare Reaktanden. Mit anderen Worten kann die erfindungsgemäße polymerfunktionalisierte Kohlenstoffnanoröhre so beschaffen sein, dass das zweite Polymer das erste Polymer intramolekular vernetzt. Dann reagieren mehr als eine Aminogruppe eines Polymerstrangs des ersten Polymers mit mehr als einer gegenüber Aminogruppen reaktiven Gruppe eines Polymerstrangs des zweiten Polymers.

Durch die Wahl des zweiten Polymers wird es möglich, einer zunächst hydrophilen Oberfläche der Kohlenstoffnanoröhre auch hydrophobe Eigenschaften zu geben. Dieses ist wichtig, wenn solche Nanoröhren beispielsweise in eine Polymermatrix eingearbeitet werden sollen. Die Nanoröhren können zum Beispiel Kontaktwinkel gegenüber Wasser, bestimmt durch die Wilhelmy-Plattenmethode, von ≥ 145° bis ≤ 175°, vorzugsweise von ≥ 155° bis ≤ 170°, aufweisen. In Hinblick auf eine rationelle Syntheseplanung kann für verschiedene gewünschte Oberflächeneigenschaften zunächst eine gemeinsame Vorstufe genutzt werden.

In einer Ausführungsform der erfindungsgemäßen polymerfunktionalisierten Kohlenstoffnanoröhre sind die Aminogruppen des Aminogruppen umfassenden ersten Polymers primäre Aminogruppen. Dieses ist insbesondere von Vorteil, wenn die Adsorption des ersten Polymers auf eine Nanoröhre aus wässriger Lösung erfolgen soll. Dann wird von der Wasserlöslichkeit der primäre Aminogruppen umfassenden Polymere profitiert. Weiterhin weisen solche Polymere pro aminischem N-Atom zwei reaktive H-Atome auf, was eine breitere Gruppe von Anbindungsreaktionen des zweiten Polymers ermöglicht.

In einer weiteren Ausführungsform der erfindungsgemäßen polymerfunktionalisierten Kohlenstoffnanoröhre ist das erste Polymer ausgewählt aus der Gruppe umfassend Polyvinylamin, Polyallylamin, Polyaminosaccharide, Polyethylenimin und/oder Copolymere der vorgenannten Polymere mit weiteren Polymeren. Das Molekulargewicht M_{w} dieser Polymere kann ≥ 50000 g/mol bis ≤500000 g/mol, vorzugsweise ≥200000 g/mol bis ≤400000 g/mol betragen. Besonders bevorzugt ist ein Polyvinylamin mit einem Molekulargewicht M_{w} von ≥330000 g/mol bis ≤ 350000 g/mol und einem Hydrolysegrad von ≥90%.

In einer weiteren Ausführungsform der erfindungsgemäßen polymerfunktionalisierten Kohlenstoffnanoröhre umfassen die gegenüber Aminogruppen reaktiven Gruppen des zweiten Polymers cyclische Carbonsäureanhydridgruppen und/oder Isocyanatgruppen. Unter den Carbonsäureanhydridgruppen sind hierbei Carbonsäureanhydridgruppen mit 5 oder 6 Ringatomen bevorzugt. Beispiele hierfür sind Bernsteinsäureanhydrid-Gruppen. Diese funktionellen Gruppen entstehen bei der Copolymersation von Maleinsäureanhydrid mit einem Olefin. Der Vorteil von Carbonsäureanhydridgruppen liegt darin, dass bei der Reaktion mit den Aminogruppen des ersten Polymers keine Kondensationsprodukte freigesetzt werden, sondern eine Ringöffnung erfolgt.

Isocyanatgruppen können beispielsweise Teil eines Polyurethanpolymers sein, eines Polyurethan-Prepolymers oder eines polymeren Polyisocyanats. Geeignet sind unter anderem Polyurethanpolymere, Polyurethanprepolymere oder polymere Polyisocyanate auf der Basis von aromatischen oder aliphatischen Polyisocyanaten wie Toluylendiisocyanat, Diphenyldimethandiisocyanat, Hexamethylendiisocyanat, Isophoron-Diisocyanat und/oder H₁₂-Diphenylmethandiisocyanat.

In einer weiteren Ausführungsform der erfindungsgemäßen polymerfunktionalisierten Kohlenstoffnanoröhre ist das zweite Polymer ausgewählt aus der Gruppe umfassend Poly(octadecen-maleinsäureanhydrid), Poly(ethylen-maleinsäureanhydrid), Poly(styrol-maleinsäureanhydrid), Poly(isobutylen-maleinsäureanhydrid) und/oder Poly(methylvinylethermaleinsäureanhydrid). Diese Polymere vereinen den Vorteil der reaktiven cyclischen Carbonsäureanhydridgruppen mit der Möglichkeit, über die Wahl des mit Maleinsäureanhydrid copolymerisierten Olefins die Hydrophobie der Sekundärfunktionalisierung zu steuern. Das Molekulargewicht Mₙ dieser Polymere kann ≥20000 g/mol bis ≤100000 g/mol, vorzugsweise ≥ 30000 g/mol bis ≤ 50000 g/mol betragen. Besonders bevorzugt ist ein Poly(octadecenmaleinsäureanhydrid) mit einem Molekulargewicht Mₙ von ≥30000 g/mol bis ≤50000 g/mol.

In Hinblick auf die zu funktionalisierende Kohlenstoffnanoröhre selbst kann sie beispielsweise eine nicht kovalent funktionalisierte, mehrwandige Kohlenstoff-Nanoröhre mit einem Durchmesser von ≥3 nm bis ≤100 nm sein. Der Durchmesser bezieht sich hierbei auf den mittleren Durchmesser der Nanoröhren. Er kann auch in einem Bereich von ≥5 nm bis ≤80 nm und vorteilhafterweise von ≥6 nm bis ≤60 nm liegen. Die Länge der Nanoröhren ist zunächst nicht begrenzt. Sie kann aber beispielsweise in einem Bereich von ≥50 nm bis ≤100 µm und vorteilhafterweise von ≥ 100 nm bis ≤ 10 µm liegen. Solche Kohlenstoffnanoröhren sind beispielsweise unter dem Namen BAYTUBES^{®} von der Firma Bayer Materialscience AG erhältlich.

Ein weiterer Gegenstand der vorliegenden Erfindung ist ein Verfahren zur Herstellung einer erfindungsgemäßen polymerfunktionalisierten Kohlenstoffnanoröhre, umfassend die Schritte:
(A) Bereitstellen von Kohlenstoffnanoröhren in einer wässrigen Lösung eines Aminogruppen umfassenden ersten Polymers; und
(B) Hinzufügen einer Lösung eines zweiten, gegenüber Aminogruppen reaktive Gruppen umfassendes Polymer zu einer Dispersion der in Schritt (A) erhaltenen, das erste Polymer umfassenden Kohlenstoffnanoröhren.

Schritt (A) des erfindungsgemäßen Verfahrens beinhaltet zunächst das Bereitstellen von Kohlenstoffnanoröhren als Ausgangsmaterial. Geeignete Nanoröhren wurden bereits vorstehend beschrieben, so dass hierauf in vollem Umfang Bezug genommen und auf eine wiederholte Aufzählung verzichtet wird. Gleiches gilt für die Beschreibungen des ersten und des zweiten Polymers.

Die Kohlenstoffnanoröhren liegen in einer wässrigen Lösung eines Aminogruppen umfassenden ersten Polymers vor. Die Konzentration des ersten Polymers in der wässrigen Lösung, berechnet ohne die Kohlenstoffnanoröhren, kann beispielsweise in einem Bereich von ≥0,01 Gewichts-% bis ≤10 Gewichts-%, vorzugsweise von ≥0,1 Gewichts-% bis ≤1 Gewichts-%, bezogen auf das Gesamtgewicht der wässrigen Lösung ohne die Kohlenstoffnanoröhren, liegen. Die Konzentration der eingesetzten Kohlenstoffnanoröhren in der wässrigen Lösung des ersten Polymers kann beispielsweise in einem Bereich von ≥0,1 Gewichts-% bis ≤10 Gewichts-%, vorzugsweise von ≥ 1 Gewichts-% bis ≤5 Gewichts-%, bezogen auf das Gesamtgewicht der wässrigen Lösung ohne die Kohlenstoffnanoröhren, liegen.

In Schritt (B) werden die erhaltenen, mit dem ersten Polymer primärfunktionalisierten Nanoröhren mit einer Lösung eines zweiten Polymers umgesetzt, um die Reaktion der Aminogruppen des ersten Polymers mit reaktiven Gruppen des zweiten Polymers ablaufen zu lassen. Das Lösungsmittel für das zweite Polymer sollte dieses zumindest teilweise bei den gewünschten Gewichtsanteilen in Lösung halten. Vorteilhafterweise ist das zweite Lösungsmittel mit Wasser zumindest teilweise mischbar, so dass die Sekundärfunktionalisierung in homogener Phase ablaufen kann. Für den Fall, dass das zweite Polymer reaktive Gruppen umfasst, welche auch mit Wasser reagieren, sollte das Lösungsmittel gegenüber solchen Gruppen wie zum Beispiel Isocyanatgruppen inert oder zumindest reaktionsträge sein. Beispiele für generell geeignete Lösungsmittel sind Methanol, Ethanol, Isopropanol, Butanol, Ethylenglykol, Propylenglykol, Butylenglykol, Aceton, N,N-Dimethylformamid, Dimethylsulfoxid, N-Methyl-2-pyrrolidon, Gemische der vorgenannten Lösungsmittel untereinander und/oder Mischungen der vorgenannten Lösungsmittel mit Wasser. Besonders bevorzugt ist Aceton. Die Konzentration des zweiten Polymers in dem Lösungsmittel kann beispielsweise in einem Bereich von ≥0,01 Gewichts-% bis ≤10 Gewichts-%, vorzugsweise von ≥0,1 Gewichts-% bis ≤1 Gewichts-% liegen.

In einer Ausführungsform des erfindungsgemäßen Verfahrens werden die in Schritt (A) erhaltenen, das erste Polymer umfassenden Kohlenstoffnanoröhren vor dem Schritt (B) nicht getrocknet. Es werden also die erhaltenen primärfunktionalisierten Nanoröhren nicht getrocknet, bevor sie weiter umgesetzt werden. Dieses ist vorteilhaft, wenn die getrockneten Nanoröhren aus Schritt (A) zur Aggregierung neigen und dann unbrauchbar würden. Nach Schritt (A) können aber durchaus Reinigungsschritte durchgeführt werden, beispielsweise Waschen und Zentrifugieren. Ebenso können nach Schritt (B) sich Reinigungsschritte anschließen. Nach Schritt (B) können die sekundärfunktionalisierten Kohlenstoffnanoröhren getrocknet werden. Dieses kann unter anderem im Vakuum geschehen.

In einer Ausführungsform des erfindungsgemäßen Verfahrens werden die Schritte (A) und/oder (B) bei einer Temperatur von ≥0 °C bis ≤30 °C durchgeführt. Das erfindungsgemäße Verfahren hat den Vorteil, dass keine hohen Temperaturen benötigt werden, wie sie beispielsweise bei einer Reaktionsextrusion herrschen. Vorzugsweise werden die Schritte (A) und/oder (B) bei Raumtemperatur durchgeführt.

In einer weiteren Ausführungsform des erfindungsgemäßen Verfahrens beträgt der pH-Wert der wässrigen Lösung des ersten Polymers in Schritt (A) > 7. Wird im basischen Medium gearbeitet, so kann die Anzahl der unprotonierten Aminogruppen erhöht werden. Auf diese Weise stehen mehr Aminogruppen für die Sekundärfunktionalisierung mit dem zweiten Polymer zur Verfügung. Der pH-Wert der wässrigen Lösung des ersten Polymers kann beispielsweise in einem Bereich von ≥8 bis ≤10 liegen.

In einer weiteren Ausführungsform des erfindungsgemäßen Verfahrens beträgt der pH-Wert der wässrigen Lösung des ersten Polymers in Schritt (A) < 7. Wird im sauren Medium gearbeitet, so kann die Anzahl der unprotonierten Aminogruppen verringert werden. Auf diese Weise stehen weniger Aminogruppen für die Sekundärfunktionalisierung mit dem zweiten Polymer zur Verfügung. Der pH-Wert der wässrigen Lösung des ersten Polymers kann beispielsweise in einem Bereich von ≥2 bis ≤6,5 liegen.

Es ist ein Vorteil des erfindungsgemäßen Verfahrens, dass in Schritt (A) in wässriger Lösung gearbeitet wird. Auf diese Weise erhält man zwei Möglichkeiten, um auf die späteren Oberflächeneigenschaften der erfindungsgemäßen polymerfunktionalisierten Kohlenstoffnanoröhren Einfluss zu nehmen. Neben der Wahl des zweiten Polymers kann auch noch durch die Festlegung des pH-Wertes auch bestimmt werden, in welchem Maße das zweite Polymer an das erste Polymer anbindet.

Ein weiterer Gegenstand der vorliegenden Erfindung ist eine Dispersion, umfassend erfindungsgemäße polymerfunktionalisierte Kohlenstoffnanoröhren. Hierin wird die Dispergierbarkeit der erfindungsgemäßen Nanoröhren ausgenutzt. Das Dispergiermedium kann flüssig oder fest sein. Beispielsweise kann es ein Polymer, insbesondere ein Polyurethan sein. Dann liegt ein Polyurethanpolymer vor, in dem die erfindungsgemäßen Kohlenstoffnanoröhren dispergiert sind. Es ist möglich, dass in der erfindungsgemäßen Dispersion die polymerfunktionalisierten Kohlenstoffnanoröhren in einem Anteil von ≥0,1 Gewichts-% bis ≤15 Gewichts-% enthalten sind. Der Anteil dieser Kohlenstoffnanoröhren kann auch ≥0,5 Gewichts-% bis ≤5 Gewichts-% betragen.

In einer Ausführungsform der Dispersion ist die Dispersion eine nichtwässrige flüssige Dispersion. Auf diese Weise können die erfindungsgemäßen Nanoröhren für die Weiterverarbeitung, beispielsweise als Beschichtungsmittel, bereitgestellt werden.

Ein weiterer Gegenstand der vorliegenden Erfindung ist ein Polymer, umfassend erfindungsgemäße polymerfunktionalisierte Kohlenstoffnanoröhren in einem Anteil unterhalb der Perkolationsgrenze der polymerfunktionalisierten Kohlenstoffnanoröhren. Das Polymer kann beispielsweise in Polyurethanpolymer sein. Die Perkolationsgrenze ist hierbei der Gehalt an erfindungsgemäßen Kohlenstoffnanoröhren zu verstehen, oberhalb dessen die elektrische Leitfähigkeit des die Nanoröhren umfassenden Polymers sprunghaft ansteigt. Wird die Perkolationsgrenze nicht überschritten, so lässt sich die dielektrische Konstante des Materials erhöhen. So lassen sich mit einem geeigneten Basispolymer dielektrische Elastomere erhalten.

Ein weiterer Gegenstand der vorliegenden Erfindung ist ein Polymer, umfassend erfindungsgemäße polymerfunktionalisierte Kohlenstoffnanoröhren in einem Anteil oberhalb der Perkolationsgrenze der polymerfunktionalisierten Kohlenstoffnanoröhren. Das Polymer kann beispielsweise ein Polyurethanpolymer sein. Oberhalb der Perkolationsgrenze lassen sich solche Materialien zum Beispiel als Elektroden, mit einem geeigneten Basispolymer als elastomere Elektroden verwenden.

Ein weiterer Gegenstand der vorliegenden Erfindung ist eine Oberflächenbeschichtung, umfassend erfindungsgemäße polymerfunktionalisierte Kohlenstoffnanoröhren. Vorzugsweise werden durch die Sekundärfunktionalisierung hydrophobisierte Kohlenstoffnanoröhren eingesetzt, um hydrophobe Oberflächenbeschichtungen zu erhalten. Die hierin eingesetzten Nanoröhren können beispielsweise Kontaktwinkel gegenüber Wasser, bestimmt durch die Wilhelmy-Plattenmethode, von ≥ 145° bis ≤ 175°, vorzugsweise von ≥ 155° bis ≤ 170°, aufweisen. Für eine Oberflächenbeschichtung können die Nanoröhren unter anderem in Melaminharze, Polyurethane oder Silikone eingearbeitet werden.

Die vorliegende Erfindung wird anhand der nachfolgenden Figuren weiter erläutert. Es zeigen:
- FIG. 1: die Synthese von erfindungsgemäßen funktionalisierten Kohlenstoffnanoröhren
- FIG. 2: eine Rasterelektronenmikroskopaufnahme von unfunktionalisierten Kohlenstoffnanoröhren
- FIG. 3: eine Rasterelektronenmikroskopaufnahme von erfindungsgemäßen funktionalisierten Kohlenstoffnanoröhren
- FIG.4: eine Rasterelektronenmikroskopaufnahme von erfindungsgemäß funktionalisierten Kohlenstoffnanoröhren

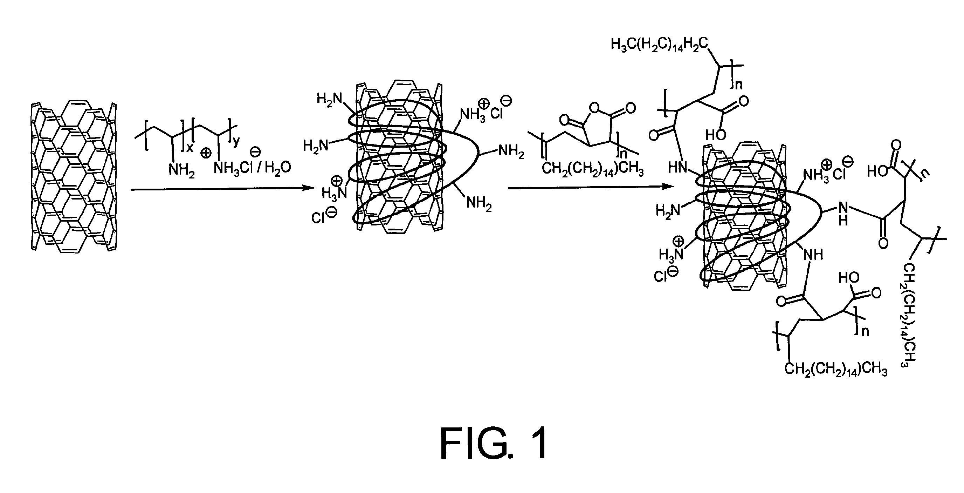

FIG. 1 zeigt schematisch und beispielhaft die Synthese von erfindungsgemäß funktionalisierten Kohlenstoffnanoröhren. Die als Edukt eingesetzte Kohlenstoffnanoröhre wird zunächst mit Polyvinylamin umgesetzt. Abhängig vom pH-Wert der wässrigen Lösung des Polyvinylamins liegt ein größerer oder geringerer Teil des Polyvinylamins in protonierter Form vor. Dargestellt ist die protonierte Form als Aminhydrochlorid. Der Anteil der unprotonierten Form im Polyvinylamin wird durch die Variable x, der Anteil der protonierten Form durch die Variable y angegeben. Dieses ist eine schematische Darstellung und sollte nicht als Block-Copolymer verstanden werden.

Das Produkt der ersten Umsetzung ist die vom Polyvinylamin/Polyvinylaminhydrochlorid umwickelte Kohlenstoffnanoröhre. Das Polymerrückgrat und freie Amino- und Ammoniumgruppen sind dargestellt. Wie eingangs beschrieben, tragen nur die freien Aminogruppen durch nichtkovalente Wechselwirkungen zur Anbindung des Polymers auf die Nanoröhrenoberfläche bei. Durch die Variation des pH-Werts der wässrigen Lösung des Polyvinylamins kann also beeinflusst werden, wie die Adsorption des Polyvinylamins verläuft. Weiterhin können durch die Protonierung freie Aminogruppen blockiert werden, so dass sie nicht am nachfolgenden Funktionalisierungsschritt teilnehmen.

Die mit Polyvinylamin/Polyvinylaminhydrochlorid umwickelte Kohlenstoffnanoröhre wird anschließend mit Poly(octadecen-maleinsäureanhydrid), welches zur Vereinfachung als POMA bezeichnet wird, umgesetzt. Hierbei reagieren Maleinsäureanhydridgruppen des POMA mit freien Aminogruppen. Im Ergebnis ragen hydrophobe C₁₆-Alkylketten sowie Carbonsäuregruppen von der Oberfläche der sekundärfunktionalisierten Kohlenstoffnanoröhre. Erfindungsgemäß ausdrücklich eingeschlossen ist der Fall, dass mehrere Maleinsäureanhydridgruppen eines POMA-Polymerstrangs mit den auf einer Kohlenstoffnanoröhre befindlichen Aminogruppen reagieren.

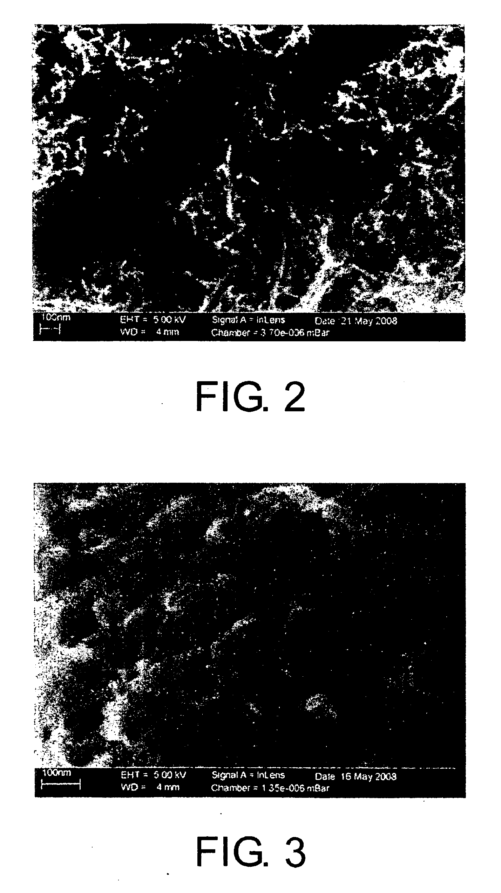

FIG. 2 zeigt eine Rasterelektronenmikroskopaufnahme von unfunktionalisierten Kohlenstoffnanoröhren. Diese Aufnahme dient als Referenz zur Beurteilung der Morphologie der funktionalisierten Nanoröhren.

FIG. 3 zeigt eine Rasterelektronenmikroskopaufnahme von Kohlenstoffnanoröhren, welche zunächst mit einer wässrigen Polyvinylaminlösung bei einem pH-Wert von 6,5 funktionalisiert wurden und anschließend mit Poly(octadecen-maleinsäureanhydrid) weiter umgesetzt wurden. Ein Vergleich mit der Aufnahme aus FIG. 1 zeigt, dass die Morphologie der Nanoröhren nach der Sekundärfunktionalisierung erhalten blieb.

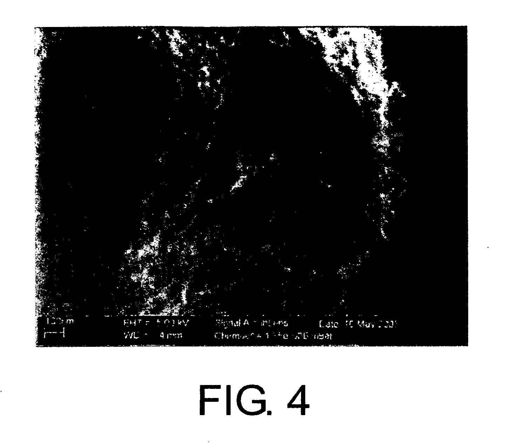

FIG. 4 zeigt eine Rasterelektronenmikroskopaufnahme von Kohlenstoffnanoröhren, welche zunächst mit einer wässrigen Polyvinylaminlösung bei einem pH-Wert von 8 funktionalisiert wurden und anschließend mit Poly(octadecen-maleinsäureanhydrid) weiter umgesetzt wurden. Ein Vergleich mit der Aufnahme aus FIG. 1 zeigt, dass die Morphologie der Nanoröhren nach der Sekundärfunktionalisierung erhalten blieb.

Die vorliegende Erfindung wird ebenfalls anhand der nachfolgenden Beispiele weiter erläutert.

### Beispiele

Beispielgruppe 1 mit den Beispielen 1a, 1b und 1c:
0,5 g BAYTUBES® (mehrwandige Kohlenstoffnanoröhren, Firma Bayer MaterialScience AG) wurden in einem Zentrifugenglas aus Teflon eingewogen und mit 20 ml einer Poly(vinylamin)-Lösung (PVAm 9095, M_{w} = 340000 g/mol, Hydrolysegrad > 90%, Firma BASF SE; 1 Gewichts-%-Lösung in Wasser) und entsprechendem pH-Wert versetzt. Im Beispiel 1a betrug der pH-Wert 6,5, im Beispiel 1b pH 8 und im Beispiel 1c pH 11. Diese Reaktionsmischung wurde für 30 Minuten kontinuierlich geschüttelt und anschließend 30 Minuten bei 12000 U/min zentrifugiert, um die Nanoröhren von der Polymer-Lösung zu trennen. Die modifizierten Nanoröhren wurden anschließend zwei Mal mit jeweils 20 ml destilliertem Wasser gewaschen und zur Trennung erneut zentrifugiert. Die modifizierten Nanoröhren wurden anschließend zweimal mit jeweils 20 ml Aceton gewaschen. 0,2 g Poly(octadecen-maleinsäureanhydrid) (POMA, Mₙ = 30000 bis 50000 g/mol, Firma Aldrich) wurden in 30 ml Aceton gelöst und anschließend zu den aminogruppentragenden Nanoröhren in ein Zentrifugenglas hinzugegeben. Die Reaktionsmischung wurde für zwei Stunden beständig bei Raumtemperatur geschüttelt und anschließend 30 Minuten bei 12000 U/min zentrifugiert. Die Probe wurde drei Tage lang mit Aceton extrahiert, um überschüssiges nicht funktionalisiertes Copolymer von der Oberfläche herunterzuspülen. Anschließend wurden die modifizierten Nanoröhren bei Raumtemperatur unter Vakuum getrocknet. Es wurde beobachtet, dass die so modifizierten Nanoröhren sowohl nach der ersten als auch nach der zweiten Funktionalisierung rieselfähig blieben.

Beispielgruppe 2 mit den Beispiel 2a bis 2f:
0,5 g mehrwandige Kohlenstoffnanoröhren (NANOCYL 7000, series, Firma Nanocyl S. A.) wurden in einem Zentrifugenglas aus Teflon eingewogen und mit 20 ml einer Poly(vinylamin)-Lösung (PVAm 9095, M_{w} = 340000 g/mol, Hydrolysegrad > 90%, Firma BASF SE; 1 Gewichts-%-Lösung in Wasser) und entsprechendem pH-Wert versetzt. Im Beispiel 2a betrug der pH-Wert 2, im Beispiel 2b pH 3, im Beispiel 2c pH 4,2, im Beispiel 2d pH 6,5, im Beispiel 2e pH 8 sowie im Beispiel 2f pH 11. Diese Reaktionsmischung wurde für 30 Minuten kontinuierlich geschüttelt und anschließend 60 Minuten bei 12000 U/min zentrifugiert, um die Nanoröhren von der Polymer-Lösung zu trennen. Die modifizierten Nanoröhren wurden anschließend zwei Mal mit jeweils 20 ml destilliertem Wasser gewaschen und zur Trennung erneut zentrifugiert. Die modifizierten Nanoröhren wurden anschließend zweimal mit jeweils 20 ml Aceton gewaschen. 0,2 g Poly(octadecen-maleinsäureanhydrid) (POMA, Mₙ = 30000 bis 50000 g/mol, Firma Aldrich) wurden in 30 ml Aceton gelöst und anschließend zu den aminogruppentragenden Nanoröhren in ein Zentrifugenglas hinzugegeben. Die Reaktionsmischung wurde für zwei Stunden beständig bei Raumtemperatur geschüttelt und anschließend 30 Minuten bei 12000 U/min zentrifugiert. Die Probe wurde drei Tage lang mit Aceton extrahiert, um überschüssiges nicht funktionalisiertes Copolymer von der Oberfläche herunterzuspülen. Anschließend wurden die modifizierten Nanoröhren bei Raumtemperatur unter Vakuum getrocknet. Es wurde beobachtet, dass die so modifizierten Nanoröhren nach der zweiten Funktionalisierung rieselfähig blieben.

Die in der Beispielgruppe 2 erhaltenen funktionalisierten Kohlenstoffnanoröhren wurden mittels Elementaranalyse (C, H, N) und Kontaktwinkelmessung charakterisiert. Ergebnisse der Messungen sind in der nachfolgenden Tabelle wiedergegeben. Die Ergebnisse in Klammern bei der Bestimmung des Kontaktwinkels und des N-Gehalts in der Elementaranalyse sind die Messwerte für die Zwischenstufe bei der Herstellung, auf welcher nur das Polyvinylamin adsorbiert ist.

| Beispiel | Kontaktwinkel θ [°] | Elementaranalyse C [%] | Elementaranalyse H [%] | Elementaranalyse N [%] |
|---|---|---|---|---|
| Ausgangsmaterial Nanoröhren | 146,3 ± 6,9 | 87,77 | 0,52 | - |
| 2a (pH 2) | 164,9 ± 13,5 (122,9 ± 0,2) | 76,24 | 3,40 | 3,08 (3,49) |
| 2b (pH 3) | 166,3 ± 12,1 (131,1 ± 1,3) | 76,88 | 3,43 | 2,96 (3,42) |
| 2c (pH 4,2) | 148,5 ± 9,9 (134,3 ± 12,4) | 87,82 | 1,15 | 2,44 (3,38) |
| 2d (pH 6,5) | 158,8 ± 18,8 (145,4 ± 8,1) | 82,89 | 2,38 | 2,66 (3,46) |
| 2e (pH 8) | 170,0 ± 4,2 (115,9 ± 25,4) | 77,91 | 3,68 | 2,56 (3,28) |
| 2f (pH 11) | 147,02 ± 3,1 (126,6 ± 3,2) | 79,35 | 3,76 | 3,05(3,58) |

Der Kontaktwinkel wurde mit der Wilhelmy-Plattenmethode bestimmt, wobei ein dynamisches Kontaktwinkelmessgerät und Tensiometer der Firma Dataphysics DCAT 11 zur softwaregesteuerten Bestimmung des Kontaktwinkels von Pulvern verwendet wurde. Die beschichteten Kohlenstoffnanoröhren wurden auf einen doppelseitigen Klebestreifen, 1 × 1 cm, der Firma Tesa AG aufgebracht. Die Nanoröhren bedeckten diesen Klebestreifen vollständig. Anschließend wurde der so beschichtete Klebestreifen in deionisiertes Wasser eingetaucht und wieder herausgezogen, wodurch die dadurch resultierende Kraft aus Gewichtskraft (F_{G}), vernachlässigbarer Auftriebskraft (F_{A}) und Wilhelmy- beziehungsweise Benetzungskraft (F_{W}) gemessen werden kann. Mit der Benetzungskraft ist eine Berechnung des Kontaktwinkels θ durch die nachfolgende Gleichung möglich, wobei u dem Umfang des Klebestreifens entspricht und γₗᵥ der Oberflächenspannung des Wassers bei 23°C (γₗᵥ = 72,8 mN · m⁻¹): cos (θ) = F_{W}/(u · γₗᵥ).

Die Ergebnisse der Kontaktwinkelmessung zeigen eine deutliche Hydrophobisierung der Kohlenstoffnanoröhren nach der Sekundärfunktionalisierung.

## Patentansprüche

1. Polymerfunktionalisierte Kohlenstoffnanoröhre, umfassend eine Kohlenstoffnanoröhre, ein an der äußeren Oberfläche der Kohlenstoffnanoröhre adsorbiertes, Aminogruppen umfassendes erstes Polymer sowie ein an das erste Polymer kovalent gebundenes zweites Polymer, wobei die Bindung des zweiten Polymers an das erste Polymer durch die Reaktion von Aminogruppen des ersten Polymers mit gegenüber Aminogruppen reaktiven Gruppen des zweiten Polymers erreicht wird.

2. Polymerfunktionalisierte Kohlenstoffnanoröhre gemäß Anspruch 1, wobei die Aminogruppen des Aminogruppen umfassenden ersten Polymers primäre Aminogruppen sind.

3. Polymerfunktionalisierte Kohlenstoffnanoröhre gemäß Anspruch 1, wobei das erste Polymer ausgewählt ist aus der Gruppe umfassend Polyvinylamin, Polyallylamin, Polyaminosaccharide, Polyethylenimin und/oder Copolymere der vorgenannten Polymere mit weiteren Polymeren.

4. Polymerfunktionalisierte Kohlenstoffnanoröhre gemäß Anspruch 1, wobei die gegenüber Aminogruppen reaktiven Gruppen des zweiten Polymers cyclische Carbonsäureanhydridgruppen und/oder Isocyanatgruppen umfassen.

5. Polymerfunktionalisierte Kohlenstoffnanoröhre gemäß Anspruch 1, wobei das zweite Polymer ausgewählt ist aus der Gruppe umfassend Poly(octadecen-maleinsäureanhydrid), Poly(ethylen-maleinsäureanhydrid), Poly(styrol-maleinsäureanhydrid), Poly(isobutylen-maleinsäureanhydrid) und/oder Poly(methylvinylether-maleinsäureanhydrid).

6. Verfahren zur Herstellung einer polymerfunktionalisierten Kohlenstoffnanoröhre gemäß Anspruch 1, umfassend die Schritte:
(A) Bereitstellen von Kohlenstoffnanoröhren in einer wässrigen Lösung eines Aminogruppen umfassenden ersten Polymers; und
(B) Hinzufügen einer Lösung eines zweiten, gegenüber Aminogruppen reaktive Gruppen umfassendes Polymer zu einer Dispersion der in Schritt (A) erhaltenen, das erste Polymer umfassenden Kohlenstoffnanoröhren.

7. Verfahren gemäß Anspruch 6, wobei die in Schritt (A) erhaltenen, das erste Polymer umfassenden Kohlenstoffnanoröhren vor dem Schritt (B) nicht getrocknet werden.

8. Verfahren gemäß Anspruch 6, wobei die Schritte (A) und/oder (B) bei einer Temperatur von ≥0 °C bis ≤30 °C durchgeführt werden.

9. Verfahren gemäß Anspruch 6, wobei der pH-Wert der wässrigen Lösung des ersten Polymers in Schritt (A) > 7 beträgt.

10. Verfahren gemäß Anspruch 6, wobei der pH-Wert der wässrigen Lösung des ersten Polymers in Schritt (A) < 7 beträgt.

11. Dispersion, umfassend polymerfunktionalisierte Kohlenstoffnanoröhren gemäß Anspruch 1.

12. Dispersion gemäß Anspruch 11, wobei die Dispersion eine nichtwässrige flüssige Dispersion ist.

13. Polymer, umfassend polymerfunktionalisierte Kohlenstoffnanoröhren gemäß Anspruch 1 in einem Anteil unterhalb der Perkolationsgrenze der polymerfunktionalisierten Kohlenstoffnanoröhren.

14. Polymer, umfassend polymerfunktionalisierte Kohlenstoffnanoröhren gemäß Anspruch 1 in einem Anteil oberhalb der Perkolationsgrenze der polymerfunktionalisierten Kohlenstoffnanöröhren.

15. Oberflächenbeschichtung, umfassend polymerfunktionalisierte Kohlenstoffnanoröhren gemäß Anspruch 1.
